# EUROPEAN PATENT APPLICATION

(11) **EP 3 800 226 A1**
(43) Date of publication of application: **07.04.2021**
(21) Application number: 19201520.4
(22) Date of filing: 04.10.2019
(51) Int. Cl.: C09J 151/06, C08L 23/22, C08K 3/22, C08K 3/34, C08K 5/521

(54) **MOISTURE CURABLE HOT-MELT ADHESIVE WITH IMPROVED CURING PROPERTIES**

(71) Applicant: SIKA TECHNOLOGY AG, 6340 Baar (CH)
(72) Inventor: Janke, Doreen, 25486 Alveslohe (DE); Funke, Björn, 21339 Lüneburg (DE); Schmider, Martin, 21335 Lüneburg (DE)
(74) Representative: Sika Patent Attorneys

(57) **Abstract**

The invention relates to a multiple-component adhesive comprising a first component comprising at least one at 25 °C solid silane-functionalized poly-α-olefin and a second component comprising at least one water-releasing substance comprising reversibly bound water and at least one liquid carrier. The invention is also related to a mixed adhesive composition, to use of the multiple-component adhesive composition as an assembly adhesive, a laminating adhesive, or as an adhesive for the building of sandwich elements, to a method for producing a composite element, and to use of a booster composition comprising at least one water-releasing substance comprising reversibly bound water and at least one liquid carrier for increasing the curing rate of a moisture curable adhesive composition.

## Description

### Technical field

The invention relates to moisture curable polyolefin-based hot-melt adhesives having improved curing properties. The invention also relates to the use of the moisture curable polyolefin-based hot-melt adhesive as an assembly adhesive, a laminating adhesive, or as an adhesive for the building of sandwich elements, in particular in automotive industry.

### Background of the invention

Hot-melt adhesives are solvent free adhesives, which are solid at room temperature and which are applied to the substrate to be bonded in form of a melt. After cooling the adhesive solidifies and forms an adhesive bond with the substrate through physically occurring bonding. Conventional hot-melt adhesives are non-reactive adhesives, which soften again upon heating and are, therefore, not suitable to be used at elevated temperatures. Reactive hot-melt adhesives contain polymers with reactive groups that enable chemical curing of the adhesive, for example, by crosslinking of the polymer chains. Due to the cured polymer matrix the reactive hot-melts do not soften upon heating and these adhesives are, therefore, suitable for use also at elevated temperatures. The chemical curing of the polymers can be initiated, for example, by heating or exposing the composition to water. Moisture curable hot-melt adhesives typically contain polymers functionalized with isocyanate or silane groups, which enable the crosslinking of the polymer chains upon contact with water, in particular with atmospheric moisture.

Polyolefin-based hot-melt adhesives, in particular hot-melt adhesives containing amorphous poly-α-olefins, represent an unique class of hot-melt adhesives, which are suitable for use in bonding of substrates composed of materials having low surface energy, such as of polypropylene. Reactive and non-reactive hot melt adhesives based on amorphous polyolefins are commonly used for bonding of low surface energy substrates in various fields, such as packaging, automotive assembly and lamination bonding applications. Typical automotive applications include interior lamination, such as bonding of foils composed of thermoplastic polyolefin (TPO) materials to polypropylene carriers and assembly bonding, such as bonding of functional parts in door-panels. In addition to the outstanding adhesion to non-polar substrates, the high heat resistance of the reactive polyolefin-based hot-melt adhesives compared to the non-reactive ones makes them suitable for use in more challenging applications, in particular in applications where increased heat stability is required.

The reactive polyolefin-based hot-melt adhesives are typically one-component moisture curable compositions containing as the main polymer component silane-functionalized poly-α-olefins, such as silane grafted poly-α-olefins. Such silane-functionalized poly-α-olefins can be obtained, for example, in a process comprising grafting an olefinically unsaturated alkoxysilanes to poly-α-olefins in the presence of a free-radical initiator, such as peroxide. Silane-functionalized poly-α-olefins are commercially available from various suppliers. The crosslinking of the silane grafted poly-α-olefin is accomplished by hydrolyzing the alkoxy silane groups by water followed by dehydrocondensation of the silanol groups, resulting in release of methanol and water. The rate of the hydrolysis reaction of the alkoxy silane groups depends on the temperature and pH of the adhesive composition as well as on the steric bulk and polarity of the released alcohol residue.

Furthermore, the curing time of a moisture curable polyolefin-based hot melt adhesive depends strongly on the ambient conditions, such as ambient humidity and temperature, and on various controlling factors which influence the rate of diffusion of moisture from the air into the applied adhesive. Important factors affecting the curing time of a moisture curable adhesive include, for example, the characteristics of air flow over the surface of the applied adhesive, geometry, exposed surface area, and degree of crosslinking of the applied adhesive body as well as the water content of the substrates that are in contact with the applied adhesive body. Consequently, thick adhesive films and covered adhesive films and beads, such as those sandwiched between two substrates, typically exhibit a prolonged curing time.

Since the curing of the applied adhesive is conducted by contact with atmospheric moisture, the curing proceeds from the outside towards the inside of the applied adhesive body. The curing rate also decreases from the outer surface of the adhesive body towards the middle since water required for the curing reaction has to diffuse through the increasingly thick layer of cured adhesive. Consequently, the rate of the curing reaction inside the adhesive body is mainly diffusion restricted and it cannot be significantly increased by increasing the ambient humidity. The layer of cured adhesive also retards the diffusion of methanol from inside to the outer surface the adhesive body, which further decreases the curing rate. Increasing the amount of the curing catalyst in the adhesive composition typically causes bubbling, which may adversely affect the mechanical properties of the cured adhesive.

There is thus need for a novel type of moisture curable polyolefin-based hot-melt adhesive, which exhibits a fast and well defined curing rate essentially independently of the above discussed controlling factors, in particular independently of the ambient humidity. Furthermore, the novel type of moisture curable polyolefin-based hot-melt adhesive should preferably cure without significant bubbling and exhibit a high early strength.

### Summary of the invention

The object of the present invention is to provide a moisture curable hot-melt adhesive composition that exhibits a fast and well defined curing rate independently of the ambient humidity.

In particular, the objective of the present invention is to provide a moisture curable polyolefin-based hot-melt adhesive composition, which exhibits a fast and well defined curing rate, in particular at low ambient humidity, and which cures without significant bubbling.

The subject of the present invention is a multiple-component adhesive composition as defined in claim 1.

It was surprisingly found out that a multiple-component adhesive composition containing a first component comprising at least one silane-functionalized poly-α-olefin and a second "booster" component comprising at least one water-releasing substance comprising reversible bound water and a liquid carrier, is able to solve the problems related to State-of-the-Art moisture-curable polyolefin-based hot-melt adhesives. The adhesive composition of the present invention is provided as a multiple-component composition, where the at least one silane-functionalized poly-α-olefin and the at least one water-releasing substance are provided in physically separated packages or compartments of a single package in order to prevent the premature reaction between the reactive constituents. At the time of use, the second component is thoroughly mixed with the first component to obtain a mixed adhesive composition, which is applied on a surface of a substrate to be adhesively bonded with another substrate. When mixed with the first component, the second component acts as a water donor for the curing of the silane-functionalized poly-α-olefins, which enables rapid and adjustable curing rate independently of the ambient humidity.

The multiple-component adhesive composition of the present invention has also been found to cure without significant formation of bubbles. This is also a surprising finding since it was anticipated that the increased curing rate of the silane-functionalized poly-α-olefins would have resulted in increased formation of bubbles in the curing adhesive composition. The formation of bubbles in the curing adhesive composition is typically something to be avoided since it is known to have a negative impact on the mechanical properties of the cured adhesive.

One of the advantages of the multiple-component adhesive composition of the present invention is that it exhibits a fast and well defined curing rate independently of the ambient humidity. Consequently, the curing rate can be easily controlled depending on the application requirements. Furthermore, the multiple-component adhesive composition cures rapidly without significant formation of bubbles and also exhibits a high early strength.

Other subjects of the present invention are presented in other independent claims. Preferred aspects of the invention are presented in the dependent claims.

### Detailed description of the invention

The subject of the present invention is a multiple-component adhesive composition comprising a first component A comprising:
a1) At least one at 25 °C solid silane-functionalized poly-α-olefin and
a second component **B** comprising:
b1) At least one water-releasing substance comprising reversibly bound water and
b2) At least one liquid carrier.

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "a-olefin" designates an alkene having the molecular formula CₓH2ₓ (x corresponds to the number of carbon atoms), which features a carbon-carbon double bond at the first carbon atom (a-carbon). Examples of α-olefins include ethylene, propylene, 1-butene, 2-methyl-1-propene (isobutylene), 1-pentene, 1-hexene, 1-heptene and 1-octene. For example, neither 1,3-butadiene, nor 2-butene, nor styrene are referred as "a-olefins" according to the present disclosure. The term "poly-α-olefin" designates homopolymers and copolymers obtained by polymerization or oligomerization of α-olefins or multiple distinct α-olefins.

The term "thermoplastic polymer" refers to any polymeric material which can be melted and re-solidified with little or no change in physical properties.

The terms "functionalized polymer" and "functional polymer" designate polymers which are chemically modified so as to contain a functional group on the polymer backbone. In contrast, the term "non-functionalized polymer" designates polymers which are not chemically modified so as to contain functional groups such as epoxy, silane, sulfonate, amide, or anhydride, on the polymer backbone. In the present disclosure the terms "(non)functionalized and "(un)modified" are used interchangeably.

The term "silane" designates compounds which in the first instance have at least one, customarily two or three, hydrolyzable groups bonded directly to the silicon atom via Si-O- bonds, more particularly alkoxy groups or acyloxy groups, and in the second instance have at least one organic radical bonded directly to the silicon atom via an Si-C bond. Silanes with alkoxy or acyloxy groups are also known to the person skilled in the art as organoalkoxysilanes and organoacyloxysilanes, respectively. Tetraalkoxysilanes, consequently, are not silanes under this definition.

Correspondingly, the term "silane group" designates the silicon-containing group bonded to the organic carbon radical via the Si-C bond. The silanes, and their silane groups, have the property of undergoing hydrolysis on contact with moisture. In so doing, they form organosilanols, these being organosilicon compounds containing one or more silanol groups (Si-OH groups) and, by subsequent condensation reactions, organosiloxanes, these being organosilicon compounds containing one or more siloxane groups (Si-O-Si groups).

The terms "silane-functionalized" and "silane-functional" designate compounds containing silane groups. The terms "silane-functionalized polymer" and "silane-functional polymer" accordingly, designate polymers, which contain at least one silane group.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight may be determined by conventional methods, preferably by gel permeation-chromatography (GPC) using polystyrene as standard, styrene-divinylbenzene gel with porosity of 100 Angstrom, 1000 Angstrom and 10000 Angstrom as the column and tetrahydrofurane as a solvent, at 35°C.

The term "softening point" or "softening temperature" designates a temperature at which compound softens in a rubber-like state, or a temperature at which the crystalline portion within the compound melts. The softening point can be measured by a Ring and Ball method as defined in DIN EN 1238 standard.

The term "melting temperature" or "melting point" refers to a temperature at which a material undergoes transition from the solid to the liquid state. The melting temperature (Tₘ) is preferably determined by differential scanning calorimetry (DSC) according to ISO 11357-3 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The term "open time" designates the length of a time period during which an adhesive applied to a surface of a substrate is still able to form an adhesive bond after being contacted with another substrate.

The "amount or content of at least one component X" in a composition, for example "the amount of the at least one silane-functionalized poly-α-olefin" refers to the sum of the individual amounts of all silane-functionalized poly-α-olefins contained in the composition. For example, in case the at least one silane-functionalized poly-α-olefin comprises 20 wt.-% of the total weight of the composition, the sum of the amounts of all silane-functionalized poly-α-olefins contained in the composition equals 20 wt.-%.

The term "normal room temperature" refers to a temperature of ca. 23 °C.

The multiple-component adhesive composition of the present invention comprises a first component **A** and a second component **B.** The term "multiple-component composition" designates in the present disclosure compositions, wherein the constituents of the composition are provided in physically separated air- and moisture impermeable packages or compartments of a single package in order to prevent premature reaction of the constituents and to ensure storage stability of the composition. The term "storage stability" refers to the ability of a composition to be stored at room temperature in a suitable container under exclusion of moisture for a certain time interval, in particular several months, without undergoing significant changes in application or end-use properties. The components of a multiple-component composition are mixed together and optionally with other components at the time of use or immediately before the time of use of the multiple-component component composition.

The first component **A** of the multiple-component adhesive composition comprises at least one at 25 °C solid silane-functionalized poly-α-olefin. Such silane-functionalized poly-α-olefins are known to a person skilled in the art and they can be produced, for example, by grafting unsaturated silanes, such as vinyl-trimethoxysilanes, into poly-α-olefins obtained, for example, by polymerization of α-olefins in the presence of a polymerization catalyst, such as a Ziegler-Natta catalyst or a metallocene catalyst or any other single-site catalyst.

According to one or more embodiments, the at least one at 25 °C solid silane-functionalized poly-α-olefin has
- a softening point determined by using the Ring and Ball method as defined in DIN EN 1238 standard in the range of 60 - 200 °C, preferably 75 - 180 °C, more preferably 80 - 175 °C and/or
- an average molecular weight (Mₙ) in the range of 2500 - 35000 g/mol, preferably 3000 - 30000 g/mol, more preferably 5000 - 25000 g/mol and/or
- a melt viscosity at 190 °C determined according to DIN 53019 standard of not more than 150000 MPa-s, preferably not more than 100000 MPa·s, more preferably not more than 75000 MPa·s, even more preferably not more than 50000 MPa·s, wherein the melt viscosity of the at least one at 25 °C solid silane-functionalized poly-α-olefin is preferably determined according to DIN 53019 standard by busing a rotational viscometer at 5 revolutions per minute, for example by using a Brookfield DV-2 Thermosel viscometer with a spindle No. 27.

Preferably, the at least one at 25 °C solid silane-functionalized poly-α-olefin is a at 25 °C solid silane grafted poly-α-olefin.

According to one or more embodiments, the at least one at 25 °C solid silane-functionalized poly-α-olefin is a at 25 °C solid silane grafted poly-α-olefin having a silane grafting degree of at least 0.5 wt.-%, preferably at least 1.0 wt.-%, more preferably at least 1.5 wt.-%. The term "silane grafted poly-α-olefin" designates in the present disclosure poly-α-olefins that have been obtained by grafting unsaturated silanes, for example vinyl-trimethoxysilanes, into poly-α-olefins, for example, in the presence of a radical initiator, such as peroxide.

The term "grafting degree" designates in the present disclosure the ratio of polymer groups in side chains to the polymer constituting the main chain of the grafted compound expressed as weight percentage. In the present disclosure the terms "grafting degree", "graft degree", and "degree of grafting" are used interchangeably. Accordingly, the term "silane grafting degree" designates in the present disclosure the ratio of silane groups in side chains to the polymer constituting the main chain of the grafted compound expressed as weight percentage.

According to one or more embodiments, the at least one at 25 °C solid silane-functionalized poly-α-olefin is a at 25 °C solid silane grafted poly-α-olefin having a silane grafting degree in the range of 1.0 - 10.0 wt.-%, preferably 1.0 - 8.5 wt.-%, more preferably 1.5 - 7.5 wt.-%, even more preferably 1.5 - 5.0 wt.-%.

According to one or more embodiments, the at least one at 25 °C solid silane-functionalized poly-α-olefin has been obtained by grafting alkoxysilanes of formula (I) into poly-α-olefins 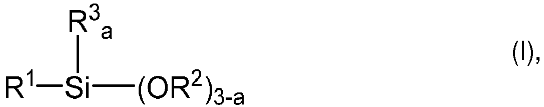
wherein R¹ stands for a linear, branched, or cyclic, alkenyl groups having 1 to 20 carbon atoms, for example, with aromatic portions,
R² stands for an alkyl group with between 1 and 5 carbon atoms, for example, for a methyl- or ethyl group, or an acyl group,
R³ stands for an alkyl group with between 1 and 8 carbon atoms, for example, for a methyl group, and
"a" stands for one of the values 0, 1 or 2, preferably 0 or 1.

According to one or more embodiments, the alkoxysilane of formula (I) is selected from the group consisting of vinyltrimethoxysilane, vinyltriethoxysilane, vinyl-tris(2-methoxyethoxy)silane, 3-methacryloxypropyltrimethoxysilane, 3-methacryloxypropyltriethoxysilane, vinyldimethylmethoxysilane, and vinylmethyldibutoxysilane, preferably from the group consisting of vinyltrimethoxysilane and vinyltriethoxysilane.

Suitable at 25 °C solid silane grafted poly-α-olefins to be used as the at least one at 25 °C solid silane-functionalized poly-α-olefin include silane grafted homopolymers, silane grafted copolymers, and silane grafted terpolymers of monomers selected from the group consisting of ethylene, propylene, 1-butene and higher α-olefins, preferably obtained by grafting alkoxysilanes of formula (I) into the respective poly-α-olefins.

According to one or more embodiments, the at least one at 25 °C solid silane-functionalized poly-α-olefin is selected from the group consisting of silane grafted homopolymers of propylene, silane grafted copolymers of propylene and ethylene, silane grafted copolymers of propylene and 1-butene or other higher α-olefins, silane grafted copolymers of ethylene and propylene, silane grafted copolymers of ethylene and 1-butene or other higher α-olefins, and silane grafted terpolymers of ethylene, propylene, and 1-butene, preferably obtained by grafting alkoxysilanes of formula (I) into the respective poly-α-olefins.

According to one or more embodiments, the at least one at 25 °C solid silane-functionalized poly-α-olefin is a at 25 °C solid silane grafted amorphous poly-α-olefin.

The term "amorphous poly-α-olefin" designates in the present disclosure poly-α-olefins having a low crystallinity degree determined by a differential scanning calorimetry (DSC) measurements, such as in the range of 0.001 - 10 wt.-%, preferably 0.001 - 5 wt.-%. The crystallinity degree of a polymer can be determined by using the differential scanning calorimetry measurements to determine the heat of fusion, from which the degree of crystallinity is calculated. In particular, the term "amorphous poly-α-olefin" designates poly-α-olefins lacking a crystalline melting point (Tₘ) as determined by differential scanning calorimetric (DSC) or equivalent technique. Amorphous poly-α-olefins are known to a person skilled in the art and they can be obtained, for example, by polymerization of α-olefins in the presence of a polymerization catalyst, such as a Ziegler-Natta catalyst or a metallocene catalyst or any other single-site catalyst.

According to one or more embodiments, the at least one at 25 °C solid silane-functionalized poly-α-olefin is a at 25 °C solid silane grafted amorphous poly-α-olefin having
- a xylene cold soluble content (XCS) determined at 25 °C according ISO 16152-2005 standard of at least 80 wt.-%, preferably at least 90 wt.-%, more preferably at least 95 wt.-% and/or
- a heat of fusion (H_{f}) as determined by DSC measurements of not more than 35 J/g, preferably not more than 30 J/g, more preferably not more than 25 J/g and/or
- a softening point determined by using the Ring and Ball method as defined in DIN EN 1238 standard in the range of 60 - 200 °C, preferably 75 - 180 °C, more preferably 80 - 175 °C and/or
- an average molecular weight (Mₙ) in the range of 2500 - 35000 g/mol, preferably 3000 - 30000 g/mol, more preferably 5000 - 25000 g/mol and/or
- a melt viscosity at 190 °C determined according to DIN 53019 standard of not more than 150000 MPa·s, preferably not more than 100000 MPa·s, more preferably not more than 75000 MPa·s, even more preferably not more than 50000 MPa·s, wherein the melt viscosity of the at least one at 25 °C solid silane grafted amorphous poly-α-olefin is preferably determined according to DIN 53019 standard by busing a rotational viscometer at 5 revolutions per minute, for example by using a Brookfield DV-2 Thermosel viscometer with a spindle No. 27 and/or
- a silane grafting degree in the range of 1.0 - 10.0 wt.-%, preferably 1.0 - 8.5 wt.-%, more preferably 1.5 - 7.5 wt.-%, even more preferably 1.5 - 5.0 wt.-%

Suitable at 25 °C solid silane grafted amorphous poly-α-olefins to be used as the at least one silane-functionalized poly-α-olefin include silane grafted amorphous atactic polypropylene, silane grafted amorphous propene rich copolymers of α-olefins, and silane grafted amorphous propene rich terpolymers of propylene and α-olefins, preferably obtained by grafting alkoxysilanes of formula (I) into the respective amorphous poly-α-olefins.

According to one or more embodiments, the at least one at 25 °C solid silane-functionalized poly-α-olefin is selected from the group consisting of silane grafted amorphous atactic polypropylene, silane grafted amorphous propene rich copolymers of propylene and ethylene, silane grafted amorphous propene rich copolymers of propylene and butene, silane grafted amorphous propene rich copolymers of propylene and hexene, and silane grafted amorphous propene rich terpolymers of propylene, ethylene, and butene, preferably obtained by grafting alkoxysilanes of formula (I) into the respective amorphous poly-α-olefins. The term "propene rich" is understood to mean copolymers and terpolymers having a content of propene derived units of at least 50 wt.-%, preferably at least 65 wt.-%, more preferably at least 70 wt.-%, based on total weight of the copolymer/terpolymer.

Suitable at 25 °C solid silane grafted amorphous poly-α-olefins are commercially available, for example, from Evonik Industries under the trade name of Vestoplast®.

The amount of the at least one at 25 ° C solid silane-functionalized poly-α-olefin in the first component **A** of the multiple-component adhesive composition is not particularly restricted. Preferably, the at least one at 25 °C solid silane-functionalized poly-α-olefin comprises at least 10 wt.-%, more preferably at least 15 wt.-%, even more preferably at least 25 wt.-% of the total weight of the first component **A.** According to one or more embodiments, the at least one at 25 °C solid silane-functionalized poly-α-olefin comprises 25 - 85 wt.-%, preferably 35 - 75 wt.-%, more preferably 35 - 65 wt.-%, even more preferably 40 - 60 wt.-% of the total weight of the first component **A.**

Furthermore, the first component **A** may comprise at least two different at 25 °C solid silane-functionalized poly-α-olefins. According to one or more embodiments, the first component **A** comprises at least one first at 25 °C solid silane grafted poly-α-olefin, preferably a at 25 °C solid silane grafted amorphous poly-α-olefin, having a silane grafting degree in the range of 0.5 - 3.0, preferably 1.0 - 3.0 and at least one second at 25 °C solid silane grafted poly-α-olefin, preferably a at 25 °C solid silane grafted amorphous poly-α-olefin, having a silane grafting degree in the range of 3.5 - 10.0, preferably 3.5 - 8.0.

According to one or more further embodiments, the first component **A** comprises at least one first at 25 °C solid silane grafted poly-α-olefin, preferably a at 25 °C solid silane grafted amorphous poly-α-olefin, which is has been produced through the grafting of silanes onto poly-α-olefins obtained by polymerization of α-olefins in the presence of a Ziegler-Natta catalyst and at least one second at 25 °C solid silane grafted poly-α-olefin, preferably a at 25 °C solid silane grafted amorphous poly-α-olefin, which has been produced through grafting of silanes onto poly-α-olefins obtained by polymerization of α-olefins in the presence of a metallocene catalyst.

According to one or more embodiments, the multi-component adhesive composition comprises, in addition to the at least one at 25 °C solid silane-functionalized poly-α-olefin, at least one at 25 °C solid polymer without silane groups, which is preferably present in the first component **A** of the multi-component adhesive composition.

Suitable polymers to be used as the at least one at 25 °C solid polymer without silane groups include, for example, homopolymers, copolymers, and terpolymers of monomers selected from the group consisting of ethylene, propylene, butylene, isobutylene, isoprene, vinyl acetate and vinyl ester with C₃ to C₁₂ carboxylic acids, and (meth)acrylate. The term "(meth)acrylate" designates in the present document both acrylates and methacrylates.

According to one or more embodiments, the at least one at 25 °C solid polymer without silane groups is a non-functionalized polymer, preferably selected from the group consisting of copolymers of ethylene and vinyl acetate and poly-α-olefins.

According to one or more embodiments, the at least one at 25 °C solid polymer without silane groups has
- a softening point, determined by using the Ring and Ball method as defined in DIN EN 1238 standard in the range of 60 - 200 °C, preferably 70 - 185 °C, more preferably 80 - 165 °C, even more preferably 85 - 155 °C and/or
- an average molecular weight (Mₙ) in the range of 2500 - 100000 g/mol, preferably 5000 - 50000 g/mol, more preferably 5000 - 35000 g/mol and/or
- a melt viscosity at 190 °C of not more than 100000 MPa·s, preferably not more than 75000 MPa·s, more preferably not more than 50000 MPa·s, even more preferably not more than 35000, wherein the melt viscosity of the at least one at 25 °C solid polymer without silane groups is preferably determined according to DIN 53019 standard by busing a rotational viscometer at 5 revolutions per minute, for example by using a Brookfield DV-2 Thermosel viscometer with a spindle No. 27.

The amount of the at least one at 25 ° C solid polymer without silane groups in the multiple-component adhesive composition is not particularly restricted. Preferably, the at least one at 25 °C solid polymer without silane groups comprises not more than 65 wt.-%, more preferably not more than 55 wt.-%, even more preferably not more than 45 wt.-% of the total weight of the multiple-component adhesive composition and/or of the total weight of the first component **A.** According to one or more embodiments, the at least one at 25 °C solid polymer without silane groups comprises 1.5 - 55 wt.-%, preferably 5 - 50 wt.-%, more preferably 10 - 45, even more preferably 15 - 40 wt.-%, still more preferably 15 - 35 wt.-% of the total weight of the multiple-component adhesive composition and/or of the total weight of the first component **A.**

According to one or more embodiments, the weight ratio of the amount of the at least at 25 °C solid silane-functionalized poly-α-olefin to the amount of the at least one at 25 °C solid polymer without silane groups, if present in the multiple-component adhesive composition, is in the range of from 1:1 to 20:1, preferably 1.25:1 to 10:1, more preferably 1.5:1 to 7:1, even more preferably 1.5:1 to 5:1.

According to one or more embodiments, the at least one at 25 °C solid polymer without silane groups is a at 25 °C solid poly-α-olefin without silane groups, preferably a at 25 °C solid amorphous poly-α-olefin without silane groups, more preferably a at 25 °C solid amorphous non-functionalized poly-α-olefin, wherein the poly-α-olefin has preferably been obtained by polymerization of α-olefins in the presence of a metallocene catalyst.

According to one or more embodiments, the at least one at 25 °C solid polymer without silane groups is a at 25 °C solid amorphous poly-α-olefin without silane groups, preferably a at 25 °C solid non-functionalized amorphous poly-α-olefin, having
- a xylene cold soluble content (XCS) determined at 25 °C according ISO 16152-2005 standard of at least 80 wt.-%, preferably at least 90 wt.-%, more preferably at least 95 wt.-% and/or
- a heat of fusion (H_{f}) as determined by DSC measurements of not more than 35 J/g, preferably not more than 30 J/g, more preferably not more than 25 J/g and/or
- a softening point, determined by using the Ring and Ball method as defined in DIN EN 1238 standard in the range of 60 - 200 °C, preferably 70 - 185 °C, more preferably 80 - 165 °C, even more preferably 85 - 155 °C and/or
- an average molecular weight (Mₙ) in the range of 2500 - 100000 g/mol, preferably 5000 - 50000 g/mol, more preferably 5000 - 35000 and/or
- a melt viscosity at 190 °C, preferably determined according to DIN 53019 standard by busing a rotational viscometer at 5 revolutions per minute, for example by using a Brookfield DV-2 Thermosel viscometer with a spindle No. 27, of not more than 100000 MPa·s, preferably not more than 75000 MPa·s, more preferably not more than 50000 MPa·s, even more preferably not more than 35000.

According to one or more embodiments, the at least one at 25 °C solid polymer without silane groups is selected from the group consisting of non-functionalized amorphous atactic polypropylene, non-functionalized amorphous propene rich copolymers of propylene and ethylene, non-functionalized amorphous propene rich copolymers of propylene and butene, non-functionalized amorphous propene rich copolymers of propylene and hexene, and non-functionalized amorphous propene rich terpolymers of propylene, ethylene, and butene.

The second component **B** of the multiple-component adhesive composition comprises:
b1) At least one water-releasing substance comprising reversibly bound water and
b2) At least one liquid carrier.

The expression "reversibly bound water" refers to the water contained in the at least one water-releasing substance, which can be released, for example, by heating the at least one water-releasing substance to an elevated temperature, in particular to an application temperature of the multiple-component adhesive composition, and/or by contacting the at least one water-releasing substance with moisture reactive functional groups, in particular with the silane groups of the at least one at 25 °C solid silane-funtionalized poly-α-olefin. Preferably, the at least one water-releasing substance comprises a carrier material and the reversibly bound water physically or chemically bound to the carrier material.

The second component **B** of the multiple-component adhesive composition may further contain water that is not reversibly bound to a carrier material, i.e. water that is present in the second component **B** as free water. It is, however, preferred that the second component **B** is substantially free of water that is not reversibly bound to a carrier material. The expression "substantially free" is understood to mean in this context that the amount of water that is not reversibly bound to a carrier material is less than 0.01 wt.-%, preferably less than 0.005 wt.-%, based on the total weight of the second component **B.**

Preferred amount of the reversibly bound water contained in the second component **B** depends on the desired curing rate of the multiple-component adhesive composition and on the amount of moisture reactive functional groups contained in the first component **A.** Preferably, the ratio of the molar amount of silane groups contained in the first component **A** to the molar amount of reversibly bound water contained in the second component **B** is from 5:1 to 1:2, preferably from 4:1 to 1:1.5, more preferably from 3:1 to 1:1.

It may also be preferable that the amount of the reversibly bound water in the second component **B** is not more than 65 wt.-%, more preferably not more than 55 wt.-%, still more preferably not more than 45 wt.-%, based on the total weight of the second component **B.** According to one or more embodiments, the second component **B** comprises 0.15 - 55 wt.-%, preferably 0.5 - 45 wt.-%, more preferably 1.0 - 35 wt.-%, even more preferably 1.5 - 30 wt.-%, still more preferably 2.5 - 25 wt.-% of reversibly bound water, based on the total weight of the second component **B.**

The preferred amount of the second component **B** in the multiple-component adhesive composition depends on the desired curing rate of the multiple-component adhesive composition and on the amount of reversible bound water contained in the second component **B.** It may be preferable that the second component **B** comprises not more than 45 wt.-%, more preferably not more than 35 wt.-%, even more preferably not more than 25 wt.-% of the total weight of the multiple-component adhesive composition. According to one or more embodiments, the second component **B** comprises 0.1 - 35 wt.-%, preferably 0.15 - 25 wt.-%, more preferably 0.25 - 20 wt.-%, even more preferably 0.5 - 15 wt.-%, still more preferably 0.5 - 10 wt.-% of the total weight of the multiple-component adhesive composition.

The second component **B** further comprises at least one liquid carrier. The term "liquid" is defined in the present disclosure as a material that flows at normal room temperature, has a pour point of less than 20 °C and/or a kinematic viscosity at 25 °C of 50000 MPa·s or less.

Suitable liquid carriers include all compounds that can form a stable paste, preferably a homogenous stable paste with the at least one water-releasing substance and which do not negatively affect the properties of the multiple-component adhesive composition, in particular the application relevant properties and adhesive properties, such as the rate of curing and adhesive strength of the cured adhesive composition. Preferably, the at least one water-releasing substance is dispersed, preferably homogeneously dispersed into the at least one liquid carrier.

According to one or more embodiments, the at least one liquid carrier is a at 25 °C liquid hydrocarbon resin, preferably having
- an average molecular weight (Mₙ) of not more than 15000 g/mol, preferably not more than 7500 g/mol, more preferably not more than 10000 g/mol, even more preferably not more than 5000 g/mol, still more preferably not more than 3500 g/mol and/or
- a pour point determined according to ISO 3016 standard in the range of -25 to +20 °C, preferably from -15 to +15 °C, more preferably from -10 to +10 °C and/or
- a polydispersity index (M_{w}/Mₙ) determined by gel permeation-chromatography (GPC) of not more than 7.5, more preferably not more than 5.0, such as in the range of 0.5 - 5.0, preferably 1.0 - 4.5, more preferably 1.0 - 3.5, even more preferably 1.25 - 2.5.

According to one or more embodiments, the at least one liquid carrier is selected from a group consisting of at 25 °C liquid liquid polybutenes and at 25 °C liquid polyisobutylenes (PIB). The term "at 25 °C liquid polybutene" designates in the present disclosure low molecular weight olefin oligomers comprising isobutylene and/or 1-butene and/or 2-butene.The ratio of the C₄-olefin isomers can vary by manufacturer and by grade. When the C4-olefin is exclusively 1-butene, the material is referred to as "poly-n-butene" or "PNB". The term "at 25 °C liquid polyisobutylene" designates in the present disclosure low molecular weight polyolefins and olefin oligomers of isobutylene, preferably containing at least 75 %, more preferably at least 85 % of repeat units derived from isobutylene. Particularly suitable at 25 °C liquid polybutenes and polyisobutylenes to be used as the at least one liquid carrier have an average molecular weight (Mₙ) of not more than 10000 g/mol, preferably not more than 5000 g/mol, more preferably not more than 3500 g/mol, even more preferably not more than 3000 g/mol, still more preferably not more than 2500 g/mol.

Suitable at 25°C liquid polybutenes and polyisobutylenes are commercially available, for example, under the trade names of Indopol® H-300, Indopol® H-1200, and Indopol® H-1500 (from Ineos); under the trade names of Glissopal® V230, Glissopal® V500, Glissopal® V700, and Glissopal ® V1500 (from BASF); under the trade name of Dynapak® poly 230 (from Univar GmbH, Germany); and under the trade name of Daelim® PB 950 (from Daelim Industrial).

According to one or more embodiments, the at least one liquid carrier is an at 25 °C liquid polyisobutylene (PIB), preferably having
- an average molecular weight (Mₙ) of not more than 5'000 g/mol, more preferably not more than 3'500 g/mol, even more preferably not more than 3'000 g/mol and/or
- a polydispersity index (M_{w}/Mₙ) determined by gel permeation-chromatography (GPC) of not more than 7.5, more preferably not more than 5.0, such as in the range of 0.5 - 5.0, preferably 1.0 - 4.5, more preferably 1.0 - 3.5, even more preferably 1.25 - 2.5.

Preferably, the at least one liquid carrier comprises at least 25 wt.-%, more preferably at least 35 wt.-%, even more preferably at least 45 wt.-%, still more preferably at least 55 wt.-% of the total weight of the second component **B.** According to one or more embodiments, the at least one liquid carrier comprises 35 - 95 wt.-%, preferably 45 - 95 wt.-%, more preferably 50 - 90 wt.-%, even more preferably 55 - 90 wt.-% of the total weight of the second component **B.** Amounts of the at least one liquid carrier falling within the above cited ranges have been found out to be suitable for providing the second component **B** in form of a homogeneous paste, which can be easily mixed with the first component **A** to obtain a homogeneous mixture.

The at least one water-releasing substance is preferably present in the second component **B** in form of solid particles, more preferably in form of finely divided solid particles. The term "finely divided solid particles" refers to particles, whose median particle size d₅₀ is less than 250 µm, preferably less than 150 µm, more preferably less than 100 µm, even more preferably less than 50 µm, still more preferably less than 25 µm. The term "median particle size dso" refers to a particle size below which 50 % of all particles by mass are smaller than the dso value. The term "particle size" refers in the present document to the area-equivalent spherical diameter of a particle. The particle size distribution is preferably measured using dynamic image analysis method conducted according to ISO 13322-2:2006 standard. For determination of the particle size distribution, the particles are preferably suspended in air (dry dispersion method). A Camsizer device (trademark of Retsch Technology GmbH) can be used in measuring the particle size distribution.

The type of the at least one water-releasing substance is not particularly restricted in the present invention. All substances containing reversibly bound water are in principle suitable for use as the at least one water-releasing substance. However, the at least one water-releasing substance should also form a stable paste, preferably a homogenous stable paste when mixed with the at least one liquid carrier and it should not have a negative effect on the properties of the multiple-component adhesive composition, in particular to the adhesive strength of the cured adhesive composition.

Preferably, the at least water-releasing substance contains the reversibly bound water as chemically or physically bound to a solid carrier material. According to one or more embodiments, the at least one water-releasing substance is selected from the group consisting of hydrates, aquo complexes, and solid carriers containing physically bound water.

The term "hydrate" designates in the present disclosure inorganic salts containing water molecules combined in a definite ratio as an integral part of a crystal that are either bound to a metal center or that have crystallized with the metal complex. These types of hydrates are also often characterized as hydrates containing water of crystallization. Examples of suitable hydrates to be used as the at least one water-releasing substance include salt hydrates containing a metal cation and an organic or inorganic anion and at least one water molecule per ion pair.

The term "aqua complex" designates in the present disclosure coordination compounds containing metal ions with water as only ligand. These types of compounds are typically characterized as compounds containing the water bound in a coordinative fashion. The aquo complexes have a general stoichiometry [M(H₂O)ₙ]^{Z+}.

The term "solid carrier containing physically bound water" designates in the present disclosure solid materials that accommodate water in non-stoichiometric amounts. Examples of suitable solid carriers to be used for providing the at least one water-releasing substance include porous, inorganic and organic materials that can contain water enclosed in pores and/or cavities, compounds that form a gel when contacted with water, such as superabsorbers and silica gels, and compounds that form a paste with water, such as clays, polysaccharides, and polymeric materials containing ionic groups.

The proportion of reversibly bound water in the at least one water-releasing substance is not particularly restricted. However, use of water-releasing substances that are capable of reversibly binding of only small amounts of water, such as less than 5 wt.-%, in particular less than 2.5 wt.-%, for example less than 1.0 wt.-%, based on the weight of the at least one water-releasing substance, may not be preferable for use as the at least one water-releasing substance. According to one or more embodiments, the at least one water-releasing substance comprises 5 - 85 wt.-%, preferably 10 - 75 wt.-%, more preferably 10 - 70 wt.-%, even more preferably 15 - 65 wt.-%, still more preferably 15 - 55 wt.-% of reversibly bound water, based on the weight of the at least one water-releasing substance including the weight of the reversibly bound water.

Preferably, the at least one water-releasing substance is present in the second component **B** in an amount of not more than 65 wt.-%, more preferably not more than 55 wt.-%, even more preferably not more than 45 wt.-%, based on the total weight of the second component **B.** The term "amount of the at least one water-releasing substance" refers to the amount of the at least one water-releasing substance including the amount of reversibly bound water. According to one or more embodiments, the at least one water-releasing substance comprises 2.5 - 55 wt.-%, preferably 5 - 45 wt.-%, more preferably 10 - 45 wt.-%, even more preferably 15 - 40 wt.-% of the total weight of the second component **B.** Amounts of the at least one water releasing substance falling within the above cited ranges have been found out to be suitable for providing the second component **B** in form of a homogeneous paste, which can be easily mixed with the first component **A** to obtain a homogeneous mixture by using conventional mixing techniques.

According to one or more embodiments, the at least one water-releasing substance is selected from the group consisting of hydrates and solid carriers containing physically bound water.

According to one or more embodiments, the at least one water releasing substance comprises or consists of at least one salt hydrate and/or at least one porous material containing absorbed and/or adsorbed water. The expression "the at least one water-releasing substance comprises at least one salt hydrate" is understood to mean that the second component **B** comprises one or more salt hydrates as representatives of the at least one water-releasing substance. Accordingly, the expression "the at least one water-releasing substance consists of at least one salt hydrate" is understood to mean that the at least one water-releasing substance is composed of one or more salt hydrates, i.e. that the at least one water-releasing substance is selected from the group consisting of salt hydrates.

Suitable salt hydrates to be used as the at least one water-releasing substance include salt hydrates containing a metal cation and an organic or inorganic anion and at least one water molecule per ion pair, in particular salt hydrates of alkaline, earth alkaline, aluminum, and transition metals.

Preferably, the at least one salt hydrate has an initial dehydration temperature determined by using differential scanning calorimetry (DSC) of at or below 250 °C, preferably at or below 200 °C, more preferably at or below 175 °C, even more preferably at or below 150 °C, still more preferably at or below 125 °C. The term "initial dehydration temperature" refers here to temperature at which the salt hydrate begins to lose its water of crystallization. According to one or more embodiments, the at least one salt hydrate has an initial dehydration temperature determined by using differential scanning calorimetry (DSC) in the range of 50 - 200 °C, preferably 55 - 180 °C, more preferably 60 - 160 °C, even more preferably 65 - 140 °C, still more preferably 70 - 125 °C.

Preferably, the at least one salt hydrate is selected from the group consisting of salt hydrates of alkaline, earth alkaline, aluminum, and transition metals, more preferably from the group consisting of salt hydrates of sodium, potassium, calcium, magnesium, copper, iron, barium, and aluminum.

According to one or more embodiments, the at least one salt hydrate is selected from the group consisting of hydrates of alkaline, earth alkaline, aluminum, and transition metal sulfates and hydroxides, preferably from the group consisting of hydrates of sodium sulfate and hydroxide, hydrates of potassium sulfate and hydroxide, hydrates of calcium sulfate and hydroxide, hydrates of magnesium sulfate and hydroxide, hydrates of aluminum sulfate and hydroxide, hydrates of copper sulfate and hydroxide, hydrates of iron sulfate and hydroxide, and hydrates of barium sulfate and hydroxide, more preferably from the group consisting of hydrates of sodium sulfate, hydrates of potassium sulfate, hydrates of calcium sulfate, hydrates of magnesium sulfate, hydrates of aluminum sulfate, hydrates of copper sulfate, hydrates of iron sulfate, and hydrates of barium sulfate, even more preferably hydrates of aluminum sulfate, such as Al₂(SO₄)₃·18H₂O.

Porous materials containing absorbed and/or adsorbed water are also suitable for use as the at least one water-releasing substance. In case of adsorption, the water molecules are taken up by the surface of the porous material whereas in case of absorption, the water molecules are taken up by the volume of the porous material. The absorption and adsorption can be based on a physical or chemical phenomenon (physical/chemical absorption/adsorption).

The maximum amount of water that can be absorbed and/or adsorbed in the at least one porous material depends on the properties of the porous material and on the mechanism by which water is attached on the porous material. In case water is attached to the porous material by adsorption, the ability of the porous material to uptake water depends mainly on the specific surface area of the porous material. On the other hand, if water is attached to the porous material by absorption, the maximum amount of water that can be enclosed in cavities of the porous material depends mainly on the swelling properties of the porous material as well as on capillary pressure, surface tension, and polarity of the porous material.

According to one or more embodiments, the at least one porous material containing absorbed and/or adsorbed water is selected from the group consisting of zeolites, molecular sieves, perlite, expanded perlite, glass, phonolite, calcium silicates, fumed silica, precipitated silica, silica gel, foamed polyurethane, expanded vermiculite, fumed metal oxides, and kieselguhr, preferably zeolites, more preferably molecular sieves.

According to one or more further embodiments, the at least one water-releasing substance comprises or is composed of at least one compound that forms a gel when contacted with water and/or at least one compound that forms a paste with water and/or at least one polymeric material containing ionic groups.

Suitable compounds that form a gel when contacted with water include, for example, superabsorbers and silica gels. Suitable compounds that form a paste with water include, for example, clays and polysaccharides, such as cellulose, cellulose ethers, starch, and polyacrylic acids. Suitable clays for use as the at least one water-releasing substance include, for example, kaolin, surface treated kaolin, calcined kaolin, montmorillonite, bentonite, hectorite, aluminum silicates, and surface treated anhydrous aluminum silicates. Suitable polymeric materials carrying ionic groups for use as the at least one water-releasing substance include, for example, polyurethane polymers containing carboxyl groups or sulfonic acid groups as side chains and, salts thereof, especially ammonium salts.

According to one or more embodiments, the multiple-component adhesive composition further comprises at least one solid particulate filler. The at least one solid particulate filler may be contained in the first component **A** or in the second component **B** or the multiple-component adhesive composition can comprise a third component **C** containing the at least one solid particulate filler.

The term "solid particulate filler" designates in the present disclosure solid powdery materials, which have a relatively low adsorption and/or absorption capacity for any of the liquid compounds contained in the multiple-component adhesive composition, in particular for water, and which, therefore, are less suitable or practically unsuitable for use as the at least one water-releasing substance.

The at least one solid particulate filler is preferable essentially free of water. The wording "essentially free of water" in this context is understood to mean that the amount of water contained in the at least one solid particulate filler, such as adsorbed or absorbed in the at least one solid particulate filler, is less than 2.5 wt.-%, preferably less than 1.5 wt.-%, more preferably less than 1.0 wt.-%, based on the total weight of the at least one solid particulate filler.

Preferably, the at least one solid particulate filler is different from the at least one water-releasing substance. Furthermore, it is preferred that the at least one solid particulate filler has a water-solubility at a temperature of 20 °C of less than 0.1 g/100 g water, more preferably less than 0.05 g/100 g water, even more preferably less than 0.01 g/100 g water. The solubility of a compound in water can be measured as the saturation concentration, where adding more compound does not increase the concentration of the solution, i.e. where the excess amount of the substance begins to precipitate. The measurement for water-solubility of a compound in water can be conducted using the standard "shake flask" method as defined in the OECD test guideline 105 (adopted 27th July, 1995).

According to one or more embodiments, the at least one solid particulate filler has a median particle size d₅₀ of not more than 100 µm, preferably not more than 50 µm, more preferably not more than 25 µm, even more preferably not more than 15 µm, still more preferably not more than 10 µm. According to one or more embodiments, the at least one solid particulate filler has a median particle size dso in the range of 0.1 - 50 µm, preferably 0.25 - 35 µm, more preferably 0.5 - 25 µm, even more preferably 1.0 - 15 µm, still more preferably 1.5 - 10 µm. According to one or more further embodiments, the at least one solid particulate filler has a median particle size d₅₀ in the range of 1- 1000 nm, preferably 1 - 750 nm, more preferably 5 - 500 nm, even more preferably 10 - 300 nm, still more preferably 10 - 250 nm. It has surprisingly been found out that the formation of bubbles during curing of the multiple-component adhesive composition can be effectively reduced by incorporating one or more solid particulate fillers having a median particle size falling within the above cited ranges into the multiple-component adhesive composition.

According to one or more embodiments, the at least one solid particulate filler is selected from the group consisting of carbon black, talc, barium sulfate, and calcium carbonate, preferably from the group consisting of carbon black and talc, more preferably carbon black.

Preferably, the at least one solid particulate filler comprises not more than 20 wt.-%, more preferably not more than 15 wt.-% of the total weight of the multiple-component adhesive composition. According to one or more embodiments, the at least one solid particulate filler comprises 0.05 - 15 wt.-%, preferably 0.25 - 10 wt.-%, more preferably 0.5 - 10 wt.-%, even more preferably 1.0 - 7.5 wt.-%, still more preferably 1.5 - 5.0 wt.-% of the total weight of the multiple-component adhesive composition.

According to one or more embodiments, the multiple-component adhesive further comprises at least one catalyst for catalyzing the reactions of silane groups with water. The at least one catalyst for catalyzing the reactions of silane groups with water is preferably present in the first component **A** of the multiple-component adhesive composition.

Suitable catalysts to be used in the multiple-component adhesive composition for accelerating the reactions of silane groups with water include, for example, organic phosphorus and tin compounds, for example, dibutyl tin laurate (DBTL). Suitable organic phosphorus compounds include, for example, phosphoric acid esters, which can be used as mixtures of mono-, di- and triesters of phosphoric acid that are esterified with alkanols, for example, those having a chain length in the range from 12 to 24 carbon atoms. The acid number of the phosphoric acid esters can be in the range from approximately 120 to 240 mg/KOH per gram.

The amount of the at least one catalyst for catalyzing the reactions of silane groups with water depends, for example, on the desired curing rate of the multiple-component adhesive composition and on the amount of reversibly bound water contained in the second component **B.** According to one or more embodiments, the at least one catalyst for catalyzing the reactions of silane groups with water comprises 0.01 - 3.5 wt.-%, preferably 0.025 - 2.5 wt.-%, more preferably 0.05 - 1.5 wt.-%, even more preferably 0.1 - 1.0 wt.-%, still more preferably 0.1 - 0.75 wt.-%, most preferably 0.125 - 0.5 of the total weight of the multiple-component adhesive composition and/or of the total weight of the first component **A** of the multiple-component adhesive composition.

According to one or more embodiments, the multiple-component adhesive composition further comprises at least one paraffin wax, which is preferably present in the first component **A** of the multiple-component adhesive composition. The term "paraffin wax" refers in the present document to hard, crystalline wax composed mainly of saturated paraffin hydrocarbons. The paraffin waxes are typically obtained from petroleum distillates or derived from mineral oils of the mixed-base or paraffin-base type.

According to one or more embodiments, the at least one paraffin wax is a Fischer-Tropsch wax. According to one or more embodiments, the at least one paraffin wax has a softening point determined by using the Ring and Ball method as defined in DIN EN 1238 standard in the range of 75 - 150 °C, preferably 80 - 140 °C, more preferably 85 - 130 °C.

According to one or more embodiments the at least one paraffin wax comprises not more than 20 wt.-%, preferably not more than 15 wt.-% of the total weight of the multiple-component adhesive composition. According to one or more embodiments, the at least one paraffin wax comprises 0.05 - 20 wt.-%, preferably 0.1 - 15 wt.-%, more preferably 0.5 - 10 wt.-%, even more preferably 1.0 - 7.5 wt.-%, still more preferably 2.5 - 7.5 wt.-% of the total weight of the first component **A** of the multiple-component adhesive composition.

According to one or more embodiments, the multiple-component adhesive composition further comprises at least one polar-modified polyolefin wax, which is preferably contained in the first component **A** of the multiple-component adhesive composition.

The term "polyolefin wax" designates in the present document low molecular weight polymers of linear or branched α-olefins having from 2 to 30 carbon atoms and an average molecular weight (Mₙ) in the range of 5000 - 25000 g/mol. They include both homopolymers and copolymers of the above mentioned linear or branched α-olefins. Polyolefin waxes can be obtained by thermal decomposition of polyolefin plastics, in particular polyethylene plastic, or by direct polymerization of olefins. Suitable polymerization processes include, for example, free-radical processes, where the olefins, for example, ethylene, are reacted at high pressures and temperatures to give more or less branched waxes and processes, where ethylene and/or higher α-olefins, in particular propylene, are polymerized using metalorganic catalysts, for example Ziegler-Natta or metallocene catalysts, to give unbranched or branched waxes. The polyolefin waxes have generally at least partially crystalline structure.

The addition of polar-modified polyolefin waxes has been found to further improve the adhesion of the multiple-component adhesive composition to polar substrates. Suitable polar-modified polyolefin waxes to be used as the at least one polar-modified polyolefin wax include waxes that are obtained by grafting polar olefin monomers, for example, α-β-unsaturated carboxylic acids and/or derivatives thereof, for example (meth)acrylic acid or maleic acid anhydride and/or substituted and/or unsubstituted styrenes, to polyolefin waxes.

According to one or more embodiments, the at least one polar-modified polyolefin wax is a maleic acid anhydride-functionalized polyolefin wax , preferably selected from the group consisting of ethylene and propylene homo and copolymer waxes grafted with maleic acid anhydride, in particular from the group consisting of polypropylene and polyethylene waxes grafted with maleic acid anhydride.

Preferably, the at least one maleic acid anhydride functionalized polyolefin wax has a softening point determined by the Ring and Ball method as defined in DIN EN 1238 standard of not more than 180 °C, more preferably not more than 160 °C, even more preferably not more than 140 °C. According to one or more embodiments, the at least one maleic acid anhydride functionalized polyolefin wax has a softening point determined by the Ring and Ball method as defined in DIN EN 1238 standard in the range of 75 - 180 °C, preferably 85 - 160 °C, more preferably 90 - 150 °C.

The maleic anhydride grafting degree of the at least one maleic anhydride functionalized polyolefin wax is preferably at least 1 wt.-%, for example, at least 3 wt.-%. According to one or more embodiments, the at least one maleic anhydride functionalized polyolefin wax has a maleic anhydride grafting degree in the range of 2 - 15 wt.-%, preferably 4 - 15 % wt.-%, more preferably 8 - 12 wt.-% and/or a melt viscosity at a temperature of 170 °C determined according to DIN 53019 standard in the range of 10 - 10000 mPa·s, preferably 100 to 5000 mPa·s, more preferably 500 - 3500 mPa·s.

According to one or more embodiments, the at least one maleic anhydride functionalized polyolefin wax comprises not more than 20 wt.-%, preferably not more than 15 wt.-% of the total weight of the first component **A** of the multiple-component adhesive composition. According to one or more embodiments, the at least one maleic anhydride functionalized polyolefin wax comprises 0.25 - 20 wt.-%, preferably 0.5 - 15 wt.-%, more preferably 1.0 - 15 wt.-%, even more preferably 2.5 - 10 wt.-% of the total weight of the first component **A** of the multiple-component adhesive composition.

According to one or more embodiments, the multiple-component adhesive composition further comprises at least one tackifying resin, which is preferably contained in the first component **A.**

The term "tackifying resin" designates in the present document resins that in general enhance the adhesion and/or tackiness of a composition. The term "tackiness" refers in the present document to the property of a substance of being sticky or adhesive by simple contact, which can be measured, for example, as a loop tack. Preferred tackifying resins are tackifying at a temperature of 25 °C. Tackifying resins typically have a relatively low average molecular weight (Mₙ), such as not more than 5000 g/mol, in particular not more than 3500 g/mol, preferably not more than 2500 g/mol.

Suitable tackifying resins to be used as the at least one tackifying resin include synthetic resins, natural resins, and chemically modified natural resins. Examples of suitable natural resins and chemically modified natural resins include rosins, rosin esters, phenolic modified rosin esters, and terpene resins. The term "rosin" is to be understood to include gum rosin, wood rosin, tall oil rosin, distilled rosin, and modified rosins, for example dimerized, hydrogenated, maleated and/or polymerized versions of any of these rosins.

Suitable rosin esters can be obtained, for example, from reactions of rosins and polyhydric alcohol or polyol such as pentaerythritol, glycerol, dipentaerythritol, tripentaerythritol, trimethylol ethane, trimethylol propane, ethylene glycol, polyethylene glycol, 1,3-propanediol, 1,4-butanediol, 1,5-pentanediol, 1,6-hexanediol, trimethylene glycol, propylene glycol, neopentyl glycol, in the presence of acid or base catalyst.

Suitable terpene resins include copolymers and terpolymers of natural terpenes, such as styrene/terpene and alpha methyl styrene/terpene resins; polyterpene resins generally resulting from the polymerization of terpene hydrocarbons, such as the bicyclic monoterpene known as pinene, in the presence of Friedel-Crafts catalysts at moderately low temperatures; hydrogenated polyterpene resins; and phenolic modified terpene resins including hydrogenated derivatives thereof.

The term "synthetic resin" designates in the present document compounds obtained from the controlled chemical reactions such as polyaddition or polycondensation between well-defined reactants that do not themselves have the characteristic of resins. Monomers that may be polymerized to synthesize the synthetic resins may include aliphatic monomer, cycloaliphatic monomer, aromatic monomer, or mixtures thereof. Suitable aliphatic monomers may include C₄, C₅, and C₆ paraffins, olefins, and conjugated diolefins. Examples of aliphatic monomers or cycloaliphatic monomers include butadiene, isobutylene, 1,3-pentadiene, 1,4-pentadiene, cyclopentane, 1-pentene, 2-pentene, 2-methyl-1-pentene, 2-methyl-2-butene, 2-methyl-2-pentene, isoprene, cyclohexane, 1- 3-hexadiene, 1-4-hexadiene, cyclopentadiene, and dicyclopentadiene. Examples of aromatic monomer include C₈, C₉, and C₁₀ aromatic monomers. Typical aromatic monomers include, styrene, alphamethyl styrene, vinyl toluene, methoxy styrene, tertiary butyl styrene, chlorostyrene, coumarone, and indene monomers including indene, and methyl indene, and combinations thereof.

Suitable synthetic resins include, for example, hydrocarbon resins, coumarone-indene resins, polyindene resins, polystyrene resins, vinyl toluene-alphamethyl styrene copolymer resins, and alphamethyl styrene resins.

The term "hydrocarbon resin" designates in the present document synthetic resins made by polymerizing mixtures of unsaturated monomers obtained from petroleum based feedstocks, such as by-products of cracking of natural gas liquids, gas oil, or petroleum naphthas. These types of hydrocarbon resins are also known as "petroleum resins" or as "petroleum hydrocarbon resins". The hydrocarbon resins include also pure monomer aromatic resins, which are prepared by polymerizing aromatic monomer feedstocks that have been purified to eliminate color causing contaminants and to precisely control the composition of the product. However, the pure aromatic resins may not be preferred for use as the at least one tackifying resin due to incompatibility of these resins with un-polar polyolefin matrixes.

Examples of suitable hydrocarbon resins to be used as the at least one tackifying resin include, for example, C5 aliphatic resins, mixed C5/C9 aliphatic/aromatic resins, aromatic modified C5 aliphatic resins, cycloaliphatic resins, mixed C5 aliphatic/cycloaliphatic resins, mixed C9 aromatic/cycloaliphatic resins, mixed C5 aliphatic/cycloaliphatic/C9 aromatic resins, aromatic modified cycloaliphatic resins, C9 aromatic resins, as well hydrogenated versions of the aforementioned resins. The notations "C5" and "C9" indicate that the monomers from which the resins are made are predominantly hydrocarbons having 4-6 and 8-10 carbon atoms, respectively. The term "hydrogenated" includes fully, substantially and at least partially hydrogenated resins. Partially hydrogenated resins may have a hydrogenation level, for example, of 50 %, 70 %, or 90 %.

Suitable hydrocarbon resins are commercially available, for example, under the trade names of Wingtack® 86, Wingtack® 95, Wingtack® 98, Wingtack® Plus, Wingtack® Extra, Wingtack® ET, Wingtack® STS, and Wingtack® 86 (all from Cray Valley); under the trade name of Escorez®, such as Escorez® 1000-series, Escorez® 2000-series, Escorez® 5300-series, Escorez® 5400-series, and Escorez® 5600-series (all from Exxon Mobile Chemical); under the trade name of Novares®, for example Novares® T series, Novares® TT series, Novares® TD series, Novares® TL series, Novares® TN series, Novares® TK series, and Novares® TV series (all from RÜTGERS Novares GmbH); and under the trade name of Kristalex®, Plastolyn®, Piccotex®, Piccolastic® and Endex® (all from Eastman Chemicals).

According to one or more embodiments, the at least one tackifying resin has:
- a softening point measured by a Ring and Ball method as defined in DIN EN 1238 standard in the range of 60 - 180 °C, preferably 70 - 160 °C, more preferably 75 - 150 °C, even more preferably 75 - 135 °C, still more preferably 80 - 125 °C and/or
- an average molecular weight (Mₙ) in the range of 250 - 5000 g/mol, preferably 300 - 3500 g/mol, more preferably 500 - 3000 g/mol, even more preferably 500 - 2500 g/mol, still more preferably 500 - 1500 g/mol and/or
- a melt viscosity at 140 °C determined according to DIN 53019 standard in the range of 1000 - 15000 MPa·s, preferably 1250 - 10000 MPa·s, more preferably 1500 - 7500 MPa·s.

According to one or more embodiments, the at least one tackifying resin is a hydrocarbon resin, preferably selected from the group consisting of C5 aliphatic resins, C9 aromatic resins, mixed C5/C9 aliphatic/aromatic resins, and aromatic modified C5 aliphatic resins, more preferably from the group consisting of hydrogenated C5 aliphatic resins, hydrogenated C9 aromatic resins, mixed C5/C9 aliphatic/aromatic resins, and C5 resins co-polymerized with aromatic monomers.

The at least one tackifying resin, if used, preferably comprises not more than 50 wt.-%, more preferably not more than 40 wt.-% of the total weight of the first component **A** of the multiple-component adhesive composition. According to one or more embodiments, the at least one tackifying resin comprises 0.25 - 45 wt.-%, preferably 0.5 - 35 wt.-%, more preferably 1.5 - 25 wt.-%, even more preferably 1.5 - 15 wt.-% of the total weight of the first component **A** of the multiple-component adhesive composition.

According to one or more embodiments, the multiple-component adhesive composition further comprises, in addition to or instead of the at least one polar-modified polyolefin wax, at least one silane-functionalized polyolefin wax, which is preferably present in the first component **A.**

Suitable silane-functionalized polyolefin waxes to be used as the at least one silane-functionalized polyolefin wax include, in particular, those obtained by grafting silanes to polyolefin waxes. Preferred silane-functionalized polyolefin waxes include waxes of ethene and propene homo- or copolymers grafted with silane, in particular, a polypropylene and polyethylene waxes grafted with silane.

According to one or more embodiments, the at least one silane-functionalized polyolefin wax has a softening point determined by using the Ring and Ball method as defined in DIN EN 1238 standard, in the range of 50 - 160 °C, preferably 60 - 135 °C, more preferably 60 - 125 °C, even more preferably 65 - 110 °C.

Preferably, the at least one silane-functionalized polyolefin wax is a silane grafted polyolefin wax having a silane grafting degree of at least 1.0 wt.-%, more preferably at least 1.5 wt.-%, more preferably at least 2.0 wt.-%. According to one or more embodiments, the at least one silane-functionalized polyolefin wax is a silane grafted polyolefin wax having a silane grafting degree in the range of 2.0 - 15.0 wt.-%, preferably 4.0 - 15.0 wt.-%, most preferably 8.0 - 12.0 wt.-%.

According to one or more embodiments, the at least one silane-functionalized polyolefin wax comprises not more than 25 wt.-%, preferably not more than 20 wt.-% of the total weight of the first component **A** of the multiple-component adhesive composition. According to one or more embodiments, the at least one silane-functionalized polyolefin wax comprises 0.1 - 25 wt.-%, preferably 0.5 - 20 wt.-%, more preferably 1.0 - 20 wt.-%, even more preferably 2.5 - 15 wt.-%, still more preferably 5.0 - 15 wt.-% of the first component **A** of the multiple-component adhesive composition.

The first component **A** of the multiple-component adhesive composition may optionally contain additional constituents (auxiliaries) which are customary for moisture curing hot-melt adhesives. Examples of suitable auxiliaries include, for example, plasticizers, UV absorbers, UV stabilizers and heat stabilizers, antioxidants, flame retardants, optical brighteners, pigments, and dyes. The auxiliaries, if used at all, preferably comprise not more than 35 wt.-%, more preferably not more than 25 wt.-%, even more preferably not more than 10 wt.-%, of the total weight of the first component **A** of the multiple-component adhesive composition.

According to one or more embodiments, the first component **A** of the multiple-component adhesive composition has a softening point determined by Ring and Ball method according to DIN EN 1238 in the range of 60 - 200 °C, preferably 75 - 180 °C, more preferably 80 - 165 °C, even more preferably 80 - 155 °C.

According to one or more embodiments, the multiple-component adhesive composition of the present invention is a two-component adhesive composition composed of the first component **A** and the second component **B,** preferably a two-component hot-melt adhesive composition.

The multiple-component adhesive composition can be obtained by mixing the constituents of the first component **A** with each other, preferably at an elevated temperature, such as in the range of 80 - 200 °C, preferably 90 - 180 °C and by mixing the constituents of the second component **B** with each other and providing the thus obtained components **A** and **B** in physically separated packages or compartments of a single package in order to ensure the storage stability of the multiple-component adhesive composition.

The preferences given above for the first component **A,** the second component **B,** the at least one at 25 °C solid silane-functionalized poly-α-olefin, the at least one at 25 °C solid polymer without silane groups, the at least one water-releasing substance, and the at least one liquid carrier, the at least one paraffin wax, the at least one polar modified polyolefin wax, and the at least one silane-functionalized polyolefin wax apply to all other subjects of the present invention unless stated otherwise.

Another subject of the present invention is a mixed adhesive composition obtained by using a method comprising steps of:
I) Providing a multiple-component adhesive composition according to the present invention,
II) Mixing the components of the multiple-component adhesive composition with each other.

Step II) is preferably conducted at an elevated temperature, in particular at a temperature, which is above the softening point of the first component **A** of the multiple-component adhesive composition determined by Ring and Ball method according to DIN EN 1238. According to one or more embodiments, step II) is conducted at a temperature in the range of 75 - 200 °C, preferably 85 - 175 °C.

The mixing of the components of the multiple-component adhesive composition can be conducted using any conventional mixing apparatus typically used in the production of hot-melt adhesives, such as a speed mixer.

According to one or more embodiments, the components of the multiple-component composition are mixed with each other in step II) until a homogeneously mixed mixture is obtained.

The term "homogeneously mixed mixture" designates in the present disclosure to compositions, in which the individual constituents are distributed substantially homogeneously in the composition. A homogeneously mixed mixture of a first component **A** and a second component **B** of a multiple-component adhesive composition refers, therefore, to compositions in which the constituents of the second component **B** are homogeneously/uniformly distributed in the constituents of the first component **A** or vice versa. For a person skilled in the art it is clear that within such mixed compositions there may be regions formed, which have a slightly higher concentration of one of the constituents than other regions and that a 100 % homogeneous distribution of all the constituents is generally not achievable. Such mixed compositions with "imperfect" distribution of constituents, however, are also intended to be included by the term "homogeneously mixed mixture" in accordance with the present invention.

According to one or more embodiments, the mixed adhesive composition has a softening point determined by Ring and Ball method according to DIN EN 1238 in the range of 60 - 200 °C, preferably 75 - 180 °C, more preferably 80 - 165 °C, even more preferably 80 - 155 °C.

A mixed adhesive composition of the present invention has a good workability under usual application conditions, in particular at temperatures from 100 to 180 °C, meaning that at application temperature the mixed adhesive composition has sufficiently low viscosity to enable application to a surface of a substrate in a molten state. The mixed adhesive composition also develops a high initial strength immediately after the application to a surface of a substrate. In addition, the mixed adhesive composition cures quickly without producing an odor and without forming any bubbles during the curing process.

Preferably, the mixed adhesive composition has a viscosity at a temperature of 140 °C of less than 100000 mPa·s, preferably of less than 50000 mPa·s, even more preferably less than 25000 mPa·s, still more preferably less than 15000 mPa·s. The viscosity at temperature of 140 °C can be measured using conventional viscometers at 5 revolutions per minute, for example by using a Brookfield DV-2 Thermosel viscometer with a spindle No. 27.

Another subject of the present invention is use of the multiple-component adhesive composition of the present invention as an assembly adhesive, a laminating adhesive, or as an adhesive for the building of sandwich elements.

Another subject of the present invention is a method for producing a composite element, the method comprising steps of:
i) Providing a multiple-component adhesive composition according to the present invention,
ii) Mixing the components of the multiple-component adhesive composition to obtain a mixed adhesive composition,
iii) Applying the mixed adhesive composition to a surface of a first substrate **S1** to form an adhesive film, and
iv) Contacting the adhesive film with a surface of a second substrate **S2,** and
v) Letting the adhesive film to cure.

In step i) of the method for producing a composite element, the components of the multiple-component adhesive composition, at least the first component **A** and the second component **B,** are mixed with each other, preferably at an elevated temperature. According to one or more embodiments, the mixing of the components of the multiple-component adhesive composition is conducted at a temperature in the range of 75 - 200 °C, preferably 85 - 175 °C, more preferably 90 - 165 °C. It may also be preferred that the first component **A** is first heated to an elevated temperature to obtain a melt, which is then mixed with the second component **B.** According to one or more embodiments, the first component **A** is heated to a temperature in the range of 75 - 200 °C, preferably 85 - 175 °C, more preferably 90 - 165 °C before being mixed with the second component **B.**

The mixed adhesive composition obtained in step ii) is preferably applied onto the surface of the first substrate **S1** as a melt. The expression "as a melt" is understood to mean that the temperature of the mixed adhesive composition is above the softening point of the mixed adhesive composition.

The mixed adhesive composition is preferably applied to the surface of the first substrate **S1** to form a continuous or a discontinuous adhesive film, which preferably covers at least 25 %, more preferably at least 50 %, even more preferably at least 75 %, still more preferably at least 85 % of the surface of the first substrate **S1.**

The melt of the mixed adhesive composition can be applied on the surface of the first substrate **S1** using any conventional technique, for example, by slot die coating, roller coating, extrusion coating, calender coating, or spray coating. Typical application temperatures for the mixed adhesive composition are in the range of 100 - 200 °C, preferably 100 - 180 °C, more preferably 120 - 160 °C. The melt of the mixed adhesive composition can be applied to the surface of the first substrate **S1** to have a weigh per unit area of the adhesive layer of 50 - 500 g/m², such as 55 - 350 g/m², in particular 65 - 150 g/m².

After the adhesive film has been contacted with the surface of the second substrate **S2,** the adhesive composition develops a certain initial adhesive strength by physical curing, i.e. upon cooling. Depending on the application temperature and on the embodiment of the multiple-component adhesive composition, the chemical curing reactions may begin already during the application of the mixed adhesive composition on the surface of the first substrate **S1.** Typically, however, major part of the chemical curing occurs after the application of mixed adhesive composition, in particular, after the applied adhesive film has been contacted with the surface of the second substrate **S2.**

Step iv) of the method for producing a composite element can be conducted by pressing the second substrate **S2** together with the first substrate **S1** or by drawing the second substrate with a vacuum against the surface of the first substrate **S1.**

The surface of the first substrate **S1** can be subjected to a pre-treatment step, such as cleaning or pre-treatment with a primer, before the application of the mixed adhesive composition in step iii). Furthermore, the surface of the second substrate **S2** can be subjected to a pre-treatment step, such as cleaning or pre-treatment with a primer, before being contacted with the adhesive film in step iv). It may, however, be preferable that the surfaces of the first and second substrates **S1** and **S2** are not treated with a primer.

Especially in case the mixed adhesive composition is applied to the surface of the first substrate **S1** as a thin film having a coating weight of, for example, less than 150 g/m², in particular less than 100 g/m², the adhesive film formed in step iii) may be reactivated by heating before it is contacted with the surface of the second substrate **S2** in step iv). The reactivation temperature depends on the embodiment of the multiple-component adhesive composition. It may be preferable, for example, that the adhesive film is reactivated by heating to a temperature of 60 - 200 °C, in particular 70 - 180 °C, preferably 120 - 160 °C. The heating of the adhesive film can be conducted using any conventional techniques, such as heating in an oven, heating by air stream, or heating with infrared (IR)-radiation. The reactivated adhesive film is preferably contacted with the second substrate within short time after the reactivation temperature is reached, in any case within the open time of the mixed adhesive composition.

The first and second substrates **S1** and **S2** can be composed of any conventional material including polymeric material, metal, painted metal, glass, wood, wood derived materials such as natural fiber polypropylene (NFPP), and fiber materials. Suitable polymeric materials include, for example, polyethylene (PE), in particular high density polyethylene (HDPE), polypropylene (PP), glass-fiber reinforced polypropylene (GFPP), polyvinyl chloride (PVC), polyethylene terephthalate (PET), polystyrene (PS), polycarbonate (PC), polymethylmethacrylate (PMMA), acrylonitrile butadiene styrene (ABS), polyamide (PA), and combinations thereof.

The term "fiber material" refers in the present disclosure to a material composed of fibers. The fibers comprise or consist of organic, inorganic or synthetic material. Examples of suitable fibers include cellulose fibers, cotton fibers, protein fibers, glass fibers, and synthetic fibers made of polyester, or homopolymer or copolymer of ethylene and/or propylene, viscose, or mixtures thereof. The fibers can be short fibers or long fibers, spun, woven or unwoven fibers or filaments. The fibers can moreover be aligned or drawn fibers. Moreover, it can be advantageous to use different fibers, both in terms of geometry and composition, together. Felt and fleece can be mentioned as particularly preferable fiber materials.

The first and second substrates **S1** and **S2** can be composed of a single layer or of multiple layers of different types of materials. The layer(s) composed of polymeric materials can further contain additives such as fillers, plasticizers, flame retardants, thermal stabilizers, antioxidants, pigments, dyes, and biocides.

Another subject of the present invention is a composite element obtainable by using the method for producing a composite element of the present invention. The composite element can be, for example, a part of a vehicle, such as an automotive vehicle.

Still another subject of the present invention is use of a booster composition for increasing the curing rate of a moisture curable adhesive composition, preferably a moisture curable hot-melt adhesive composition, said adhesive composition comprising at least one at 25 °C solid silane-functionalized poly-α-olefin, wherein said booster composition comprises at least one water-releasing substance comprising reversibly bound water and at least one liquid carrier.

According to one or more embodiments, the at least one water-releasing substance comprises 5 - 85 wt.-%, preferably 10 - 75 wt.-%, more preferably 10 - 70 wt.-%, even more preferably 15 - 65 wt.-%, still more preferably 15 - 55 wt.-% of reversibly bound water, based on the weight of the at least one water-releasing substance including the weight of the reversibly bound water.

According to one or more embodiments, the at least one water-releasing substance comprises 2.5 - 55 wt.-%, preferably 5 - 45 wt.-%, more preferably 10 - 45 wt.-%, even more preferably 15 - 40 wt.-% of the total weight of the booster composition.

Preferably, the at least water-releasing substance contains the reversibly bound water as chemically or physically bound to a solid carrier material. According to one or more embodiments, the at least one water-releasing substance is selected from the group consisting of hydrates, aquo complexes, and solid carriers containing physically bound water, preferably from the group consisting of hydrates and solid carriers containing physically bound water.

Suitable hydrates for use as the at least one water-releasing substance include salt hydrates containing a metal cation and an organic or inorganic anion and at least one water molecule per ion pair, in particular salt hydrates of alkaline, earth alkaline, aluminum, and transition metals.

Examples of suitable solid carriers to be used for providing the at least one water-releasing substance include porous, inorganic and organic materials that can contain water enclosed in pores and/or cavities, compounds that form a gel when contacted with water, such as superabsorbers and silica gels, and compounds that form a paste with water, such as clays, polysaccharides, and polymeric materials containing ionic groups.

According to one or more embodiments, the at least one water releasing substance comprises or consists of at least one salt hydrate and/or at least one porous material containing absorbed and/or adsorbed water.

Preferably, the at least one salt hydrate is selected from the group consisting of salt hydrates of alkaline, earth alkaline, aluminum, and transition metals, more preferably from the group consisting of salt hydrates of sodium, potassium, calcium, magnesium, copper, iron, barium, and aluminum.

According to one or more embodiments, the at least one salt hydrate is selected from the group consisting of hydrates of sodium sulfate and hydroxide, hydrates of potassium sulfate and hydroxide, hydrates of calcium sulfate and hydroxide, hydrates of magnesium sulfate and hydroxide, hydrates of aluminum sulfate and hydroxide, hydrates of copper sulfate and hydroxide, hydrates of iron sulfate and hydroxide, and hydrates of barium sulfate and hydroxide, preferably from the group consisting of hydrates of sodium sulfate, hydrates of potassium sulfate, hydrates of calcium sulfate, hydrates of magnesium sulfate, hydrates of aluminum sulfate, hydrates of copper sulfate, hydrates of iron sulfates and hydrates of barium sulfate, more preferably hydrates of aluminum sulfate, such as Al₂(SO₄)₃ ·18H₂O.

According to one or more embodiments, the at least one porous material containing absorbed and/or adsorbed water is selected from the group consisting of zeolites, perlite, expanded perlite, glass, phonolite, calcium silicates, fumed silica, precipitated silica, silica gel, foamed polyurethane, expanded vermiculite, fumed metal oxides, and kieselguhr, preferably zeolites, more preferably molecular sieves.

According to one or more embodiments, the at least one liquid carrier is a at 25 °C liquid hydrocarbon resin, preferably having
- an average molecular weight (Mₙ) of not more than 15000 g/mol, preferably not more than 7500 g/mol, more preferably not more than 10000 g/mol, even more preferably not more than 5000 g/mol, still more preferably not more than 3500 g/mol and/or
- a pour point determined according to ISO 3016 standard in the range of -25 to +20 °C, preferably from -15 to +15 °C, more preferably from -10 to +10 °C and/or
- a polydispersity index (M_{w}/Mₙ) determined by gel permeation-chromatography (GPC) of not more than 7.5, more preferably not more than 5.0, such as in the range of 0.5 - 5.0, preferably 1.0 - 4.5, more preferably 1.0 - 3.5, even more preferably 1.25 - 2.5.

According to one or more embodiments, the at least one liquid carrier is selected from a group consisting of at 25 °C liquid liquid polybutenes and at 25 °C liquid polyisobutylenes (PIB).

According to one or more embodiments, the booster composition is the second component **B** of the multiple-component adhesive composition of the present invention and/or the moisture curable adhesive composition the first component **A** of the multiple-component adhesive composition of the present invention.

### Examples

The followings compounds and products shown in Table 1 were used in the examples.

**Table 1**

| | |
|---|---|
| PIB | At 25 °C liquid polyisobutylene, average molecular weight (Mₙ) 1500-2500 g/mol |
| Salt hydrate | Al₂(SO₄)₃ ·18H₂O |
| Molecular sieve | Micronized, highly porous, crystalline aluminosilicate with pore openings of approximately 3 Å |
| CB | Carbon black, 325 mesh residue < 200 ppm |

### Preparation of multiple-component adhesive compositions

The first component **A** of the multiple-component hot-melt adhesive was prepared by mixing the respective constituents with each other at a temperature of 150 °C.

In all examples, the first component **A** contained a basic formulation PO-RHM of a moisture curable polyolefin-based hot-melt adhesive composition comprising the following constituents:
40 - 55 wt.-% of a commercially available silane-functionalized amorphous poly-α-olefin, softening point 85-110 °C determined according to DIN EN 1427
15 - 30 wt.-% of a commercially available non-functionalized amorphous poly-α-olefin, softening point 115-130 °C determined according to DIN EN 1427,
1 - 10 wt.-% of a non-functionalized hard paraffin wax, drop point 105-125 °C determined according to DGF M-III 3,
5 - 15 wt.-% of a maleic anhydride-functionalized polypropylene wax, softening point 135-150 °C determined according to ASTM D 3104,
2.5 - 20 wt.-% of a silane-functionalized polypropylene wax, drop point 70-90 °C determined according to ASTM D 3954, and
0.15 wt.-% of a phosphate ester based catalyst containing 5-10 wt.-% of phosphor.

In examples Ex-1 to Ex-4, the first component **A** was composed of the basic formulation PO-RHM whereas in examples Ex-5 to Ex-9, an additional amount of the phosphate ester based catalyst was added to the basic formulation PO-RHM to further increase the rate of curing.

The second (booster) component **B** of the multiple-component hot-melt adhesive was prepared by mixing the respective constituents with each other at a normal room temperature of ca. 23 °C until a homogeneous paste was obtained. The molecular sieve used for providing a water-releasing substance was saturated with water at normal room temperature of ca. 23 °C before being mixed with the other constituents of the second component **B.** The salt hydrate was used as a water-releasing substance without any pre-treatment.

The three compositions used as the second (booster) component **B** of the multiple-component hot-melt adhesive are shown in Table 2 below.

**Table 2**

| **Compositions [pbw]** | **Paste 1** | **Paste 2** | **Paste 3** |
|---|---|---|---|
| PIB | 40 | 40 | 20 |
| Salt hydrate | 20 | 0 | 5 |
| Molecular sieve* | 0 | 10 | 0 |
| **Total** | 60 | 50 | 25 |
| Water content [wt.-%] | 20.8 | 4.0 | 9.8 |

| | | | |
|---|---|---|---|
| *amount includes amount of reversibly bound water | | | |

The prepared first and second components **A** and **B** were stored in separate moisture tight cartridges before the multiple-component adhesive was used for testing its curing properties.

### Characterization of curing properties

The first component **A** of each multiple-component hot-melt adhesive composition was first melted in cartridge at temperature of 150 °C for 1 hour. A specified amount of the thus obtained melt was added to a speed mixer and mixed with a specified amount of the second component **B** for 30 seconds using mixing a speed of 3500 rpm to obtain a mixed adhesive composition. In case of example Ex-9, the carbon black CB was added to speed mixer (as third component) before adding of the first component **A.**

The mixed adhesive composition was then applied with a doctor blade to a surface of a silicone paper (B700 white, Laufenberg & Sohn KG) strip placed on a glass plate having a temperature of 50 °C. The silicone paper had dimensions of 30 cm x 6 cm and the mixed test composition was applied as an adhesive film having a thickness of 500 µm and dimensions of 30 cm x 6 cm. Immediately after application of the mixed test composition, the silicone paper strip was removed from the glass plate and placed in a vacuum desiccator at normal room temperature of ca. 23 °C.

The point of time when the adhesive film was solidified was recorded as the starting point of the measurement of curing time. At defined sampling times, a test strip having dimensions of 10 cm x 1 cm was cut from the silicone paper having the adhesive film on its surface and placed on a heating plate having a temperature of 150 °C. The procedure was continued until the adhesive film of the test strip no longer melted on the heating plate, which marked the end of curing time. In addition to the curing time, the amount of bubble formation during the curing process was observed and characterized as "very low", "slight", "medium", or "strong".

The compositions of the mixed adhesive compositions, measured curing times and bubble formation behavior of the tested multiple-component hot-melt adhesive compositions are presented in Table 3.

**Table 3**

| **Compositions [wt.-%]** | **Ex-1** | **Ex-2** | **Ex-3** | **Ex-4** | **Ex-5** | **Ex-6** | **Ex-7** | **Ex-8** | **Ex-9** |
|---|---|---|---|---|---|---|---|---|---|
| PO-RHM | 99.42 | 98.77 | 96.15 | 93.02 | 91.58 | 96.44 | 96.52 | 91.48 | 88.70 |
| Added catalyst | 0.00 | 0.00 | 0.00 | 0.00 | 0.17 | 0.16 | 0.26 | 0.27 | 0.27 |
| 1st component **A** | 99.42 | 98.77 | 96.15 | 93.02 | 91.74 | 96.60 | 96.77 | 91.74 | 88.97 |
| Paste 1 | 0.58 | 1.23 | 0.00 | 0.00 | 0.00 | 0.00 | 0.00 | 0.00 | 0.00 |
| Paste 2 | 0.00 | 0.00 | 3.85 | 6.98 | 8.26 | 0.00 | 0.00 | 8.26 | 8.01 |
| Paste 3 | 0.00 | 0.00 | 0.00 | 0.00 | 0.00 | 3.40 | 3.23 | 0.00 | 0.00 |
| 2nd component **B** | 0.58 | 1.23 | 3.85 | 6.98 | 8.26 | 3.40 | 3.23 | 8.26 | 8.01 |
| CB | 0.00 | 0.00 | 0.00 | 0.00 | 0.00 | 0.00 | 0.00 | 0.00 | 3.02 |
| Total | 100.00 | 100.00 | 100.00 | 100.00 | 100.00 | 100.00 | 100.00 | 100.00 | 100.00 |

| **Curing properties** | | | | | | | | | |
|---|---|---|---|---|---|---|---|---|---|
| Curing time | >> 1 week | >> 1 week | >> 1 week | >> 1 week | 5 days | 5 days | Instant | < 20 hours | < 20 hours |
| Bubble formation | Slight | Slight | Slight | Slight | Slight | Slight | Slight | Slight | Very smooth |

## Claims

1. A multiple-component adhesive composition comprising a first component **A** comprising:
a1) At least one at 25 °C solid silane-functionalized poly-α-olefin and
a second component **B** comprising:
b1) At least one water-releasing substance comprising reversibly bound water and
b2) At least one liquid carrier.

2. The multiple-component adhesive composition according to claim 1, wherein the at least one at 25 °C solid silane-functionalized poly-α-olefin is a at 25 °C solid silane grafted amorphous poly-α-olefin.

3. The multiple-component adhesive composition according to claim 1 or 2, wherein the at least one at 25 °C solid silane-functionalized poly-α-olefin comprises 25 - 85 wt.-%, preferably 35 - 75 wt.-% of the total weight of the first component **A.**

4. The multiple-component adhesive composition according to any one of previous claims, wherein ratio of the molar amount of silane groups contained in the first component **A** to the molar amount of reversibly bound water contained in the second component **B** is from 5:1 to 1:2, preferably from 3:1 to 1:1.

5. The multiple-component adhesive composition according to any one of previous claims, wherein the second component **B** comprises 0.1 - 35 wt.-%, preferably 0.15 - 25 wt.-% of the total weight of the multiple-component adhesive composition.

6. The multiple-component adhesive composition according to any one of previous claims, wherein the at least one water-releasing substance is dispersed into the at least one liquid carrier and wherein the at least one liquid carrier is preferably an at 25 °C liquid hydrocarbon resin.

7. The multiple-component adhesive composition according to any one of previous claims, wherein the at least one liquid carrier comprises 35 - 95 wt.-%, preferably 45 - 95 wt.-%, more preferably 50 - 90 wt.-% of the total weight of the second component **B.**

8. The multiple-component adhesive composition according to any one of previous claims, wherein the at least one water-releasing substance is selected from the group consisting of hydrates, aquo complexes, and solid carriers containing physically bound water.

9. The multiple-component adhesive composition according to any one of previous claims, wherein the at least one water-releasing substance comprises 5 - 85 wt.-%, preferably 10 - 75 wt.-% of reversibly bound water, based on the weight of the at least one water-releasing substance including the weight of the reversibly bound water.

10. The multiple-component adhesive composition according to any one of previous claims, wherein the at least one water-releasing substance comprises or consists of at least one salt hydrate, preferably selected from the group consisting of hydrates of sodium, potassium, calcium, magnesium, aluminum, copper, iron, and barium sulfates and hydroxides, more preferably hydrates of aluminum sulfate and/or at least one porous material comprising absorbed and/or adsorbed water, preferably selected from the group consisting of zeolites, perlite, expanded perlite, glass, phonolite, calcium silicates, fumed silica, precipitated silica, silica gel, foamed polyurethane, expanded vermiculite, fumed metal oxides, and kieselguhr, more preferably zeolites.

11. The multiple-component adhesive composition according to any one of previous claims further comprising at least one solid particulate filler having a median particle size dso of not more than 100 µm, preferably not more than 50 µm, preferably selected from the group consisting of carbon black, calcium carbonate, talc, and barium sulfate, more preferably carbon black.

12. The multiple-component adhesive composition according to claim 11, wherein the at least one solid particulate filler comprises 0.05 - 15 wt.-%, preferably 0.25 - 10 wt.-% of the total weight of the multiple-component adhesive composition.

13. The multiple-component adhesive composition according to any one of previous claims further comprising at least one catalyst for catalyzing the reactions of silane groups with water, wherein said at least one catalyst preferably comprises 0.01 - 3.5 wt.-%, preferably 0.025 - 2.5 wt.-% of the total weight of the multiple-component adhesive composition.

14. A mixed adhesive composition obtainable by using a method comprising steps of:
I) Providing a multiple-component adhesive composition according to any one of claims 1-13,
II) Mixing the components of the multiple-component composition with each other.

15. A method for producing a composite element, the method comprising steps of:
i) Providing a multiple-component adhesive composition according to any one of claims 1-13,
ii) Mixing the components of the multiple-component adhesive composition with each other to obtain a mixed adhesive composition,
iii) Applying the mixed adhesive composition to a surface of a first substrate **S1** to form an adhesive film, and
iv) Contacting the adhesive film with a surface of a second substrate **S2**, and
v) Letting the adhesive film to cure.

16. Use of a booster composition for increasing the curing rate of a moisture curable adhesive composition comprising at least one at 25 °C solid silane-functionalized poly-α-olefin, wherein the booster composition comprises at least one water-releasing substance comprising reversibly bound water and at least one liquid carrier, preferably an at 25 °C liquid hydrocarbon resin.

17. The use according to claim 16, wherein the at least one water-releasing substance comprises 2.5 - 55 wt.-%, preferably 5 - 45 wt.-% of the total weight of the booster composition.

18. The use according to claim 16 or 17, wherein the at least one water-releasing substance comprises or consists of at least one salt hydrate, preferably selected from the group consisting of hydrates of sodium, potassium, calcium, magnesium, aluminum, copper, iron, and barium sulfates and hydroxides, more preferably hydrates of aluminum sulfate and/or at least one porous material comprising absorbed and/or adsorbed water, preferably selected from the group consisting of zeolites, perlite, expanded perlite, glass, phonolite, calcium silicates, fumed silica, precipitated silica, silica gel, foamed polyurethane, expanded vermiculite, fumed metal oxides, and kieselguhr, more preferably zeolites.
